# DEMANDE DE BREVET EUROPEEN

(11) **EP 0 987 226 A1**
(43) Date de publication de la demande: **22.03.2000**
(21) Numéro de dépôt: 98870183.5
(22) Date de dépôt: 28.08.1998
(51) Int. Cl.: C03B 33/033

(54) **Procédé et dispositif de rompage d'une feuille de verre**

(71) Demandeur: Fabricom S.A., 1180 Bruxelles (BE)
(72) Inventeur: Wauman, Steven, 1180 Bruxelles (BE); Dubuisson, Yvan, 1180 Bruxelles (BE)
(74) Mandataire: Quintelier, Claude

(57) **Abrégé**

Procédé et dispositif de rompage d'une feuille de verre (8) en au moins deux parties (8a,8b), suivant lequel on applique sur une surface supérieure de la feuille de verre une ligne de découpe (12) pour délimiter la partie à rompre, laquelle feuille est tenue par un organe de support (13) et prise par un organe de préhension (2), l'organe de support et de préhension étant disposés de part et d'autre de la ligne de découpe, lesquelles parties étant rompues par application sur la feuille de verre d'une flexion, qui fait effectuer à au moins une des parties une rotation par rapport à un axe de rotation (30) situé en dessous de la feuille de verre (8).

## Description

L'invention concerne un procédé de rompage d'une feuille de verre en au moins deux parties, suivant lequel on applique sur une surface supérieure de la feuille de verre une ligne de découpe pour délimiter la partie à rompe, laquelle feuille est tenue par un organe de support et prise par un organe de préhension, l'organe de support et de préhension étant disposés de part et d'autre de la ligne de découpe, lesquelles parties étant rompues par application d'une flexion sur la feuille de verre.

L'invention concerne également un dispositif pour l'application du procédé.

Un tel procédé et dispositif sont connus des machines outils Benteler. La feuille de verre dont il faut rompre une ou plusieurs parties est posée sur un support. Après avoir appliqué la ligne de découpe, un organe de préhension placé sur le bras d'un robot est amené vers la feuille de verre. L'organe de préhension est placé de telle façon qu'il se trouve de l'autre côté de la ligne de découpe par rapport à l'endroit où la feuille de verre est soutenue. L'organe de préhension applique une flexion sur la partie qu'il tient afin de rompre la feuille de verre le long de la ligne de découpe et de séparer ainsi ladite partie de la feuille de verre.

Un inconvénient du procédé et dispositif connus est que le rompage, tel qu'appliqué, induit des forces dans la feuille de verre qui ont pour conséquence d'abîmer le bord du verre le long de la ligne de rupture ou d'induire des zones de tension dans la feuille de verre qui la fragilisent ainsi d'avantage. Il a en effet été constaté que l'axe suivant lequel la flexion est exercée se trouve dans la feuille de verre, ce qui induit des forces considérables dans le verre.

L'invention a pour but de remédier à cet inconvénient.

A cette fin un procédé de rompage d'une feuille de verre suivant l'invention est caractérisé en ce que la flexion est appliquée en faisant effectuer à au moins une des parties, une rotation par rapport à un axe de rotation situé en dessous de la feuille de verre. En situant l'axe de rotation en dessous de la feuille de verre, la surface rayée où se trouve la ligne de découpe étant la surface supérieure, la rupture est initiée sur cette surface supérieure de la feuille de verre et progresse simultanément avec la flexion dans le verre ce qui provoque un rompage en douceur sans induire des tensions dans le verre. L'angle d'ouverture, provoqué dans la feuille de verre par le mouvement de flexion, s'ouvre ainsi à partir de la surface supérieure du verre. Dû au fait que l'axe de rotation est situé en dessous de la feuille de verre, les deux parties vont s'écarter sans induire de fortes contraintes de compression dans le verre.

Une première forme de réalisation préférentielle d'un procédé suivant l'invention est caractérisée en ce que le bord de l'organe de préhension est disposé à une distance située entre 0,5 et 10 mm de la ligne de découpe. Les forces induites par l'organe de préhension sont ainsi concentrées autour de la ligne de découpe, c'est-à-dire à l'endroit où la rupture doit se faire.

Une deuxième forme de réalisation préférentielle d'un procédé suivant l'invention est caractérisée en ce que l'organe de préhension est disposé face à une zone rectiligne de la ligne de découpe. Ainsi on s'affranchit de la forme des différentes lignes possibles concernant la distance entre préhenseur et la ligne de découpe.

Une troisième forme de réalisation préférentielle d'un procédé suivant l'invention est caractérisée en ce que l'angle de ladite rotation, la vitesse du mouvement de rotation et la distance entre la feuille de verre et l'axe de rotation sont prédéterminés. Ceci facilite l'initiation du procédé.

De préférence l'angle de rotation est situé entre 0,1 et 5°. Ceci permet de limiter le mouvement de flexion et donc les forces induites dans la feuille de verre.

Une quatrième forme de réalisation préférentielle d'un procédé suivant l'invention est caractérisée en ce que l'organe de support est monté sur un bras d'un robot qui fait tourner la partie à découper par rapport à l'organe de préhension. On combine ainsi le support et la flexion dans un même organe.

De préférence on applique des lignes de découpe auxiliaires dans la feuille de verre, lesquelles lignes auxiliaires sont déterminées en fonction de la séquence des rompages à faire.

L'invention sera maintenant décrite plus en détail à l'aide des dessins qui illustrent un exemple du dispositif et du procédé selon l'invention. Dans les dessins:
la figure 1 illustre schématiquement un exemple de réalisation d'un dispositif de rompage suivant l'invention;
la figure 2 illustre le même dispositif que celui de la figure 1, mais lors du rompage;
la figure 3 illustre l'application des lignes de découpe sur une feuille de verre; et
les figure 4 et 5 illustrent la prise de la feuille de verre par l'organe de préhension et la localisation de l'axe de rotation.

Dans les dessins une même référence a été attribuée à un même élément ou à un élément analogue.

L'exemple repris dans les dessins tient compte d'une situation de rompage pour laquelle le procédé est principalement conçu c'est-à-dire celle d'un volume utile qui doit être séparé de ses parties non-utiles ("marges", "chutes") situées en bordure.

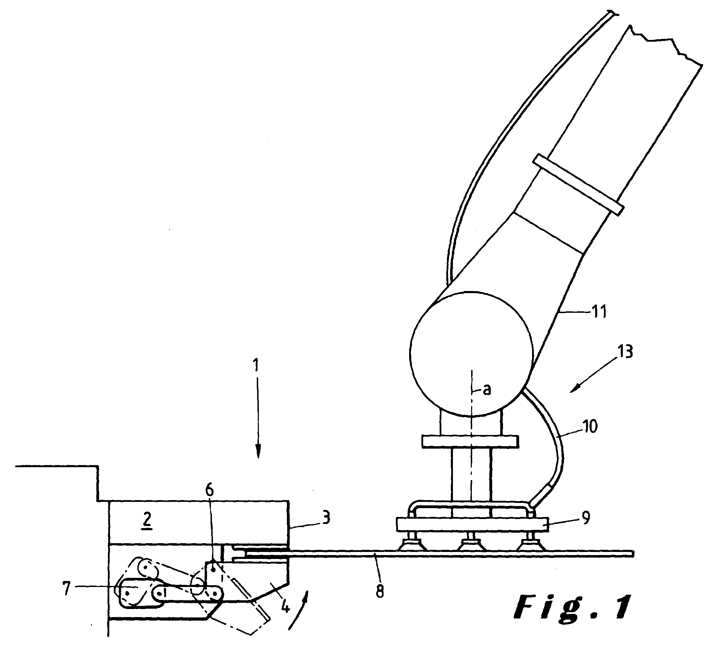

Le dispositif de rompage illustré à la figure 1 comporte un organe de préhension 2, par exemple formé par une pince mécanique, hydraulique ou pneumatique. L'organe de préhension comporte une mâchoire fixe supérieure 3 et une mâchoire mobile inférieure 4. Bien entendu d'autres formes de réalisation par exemple à deux mâchoires mobiles peuvent être conçues. La mâchoire mobile 4 est agencée pour pouvoir pivoter autour d'un axe 6. Le pivotement de la mâchoire mobile est assuré par l'unité 7 sur laquelle est montée la mâchoire mobile 4. L'organe de préhension est destiné à prendre prise sur une feuille de verre 8 soutenue par un organe de support 13.

De préférence l'organe de support 13 comporte un robot dont le bras 11 est repris à la figure 1. Le bras du robot porte un préhenseur 9 à ventouses alimenté par une conduite 10 pour l'évacuation de l'apport d'air entre les ventouses et la feuille de verre. Le bras du robot permet d'une part le transport d'une feuille de verre vers l'organe de préhension et d'autre part d'imposer des mouvements de rotation et de flexion à la feuille de verre. Le robot étant capable d'effectuer des mouvements en trois dimensions, ces mouvements peuvent être transmis à la feuille de verre prise par le préhenseur 9.

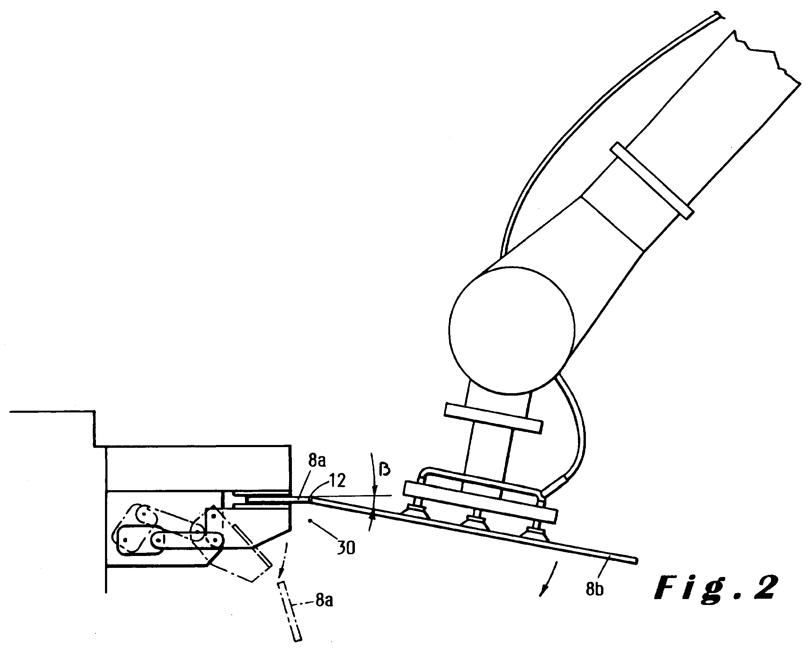

La figure 2 illustre le mouvement de flexion appliqué à la feuille de verre par le bras du robot et qui va permettre de rompre le long d'une ligne de découpe 12 la feuille de verre en deux parties 8a et 8b. Dans l'exemple illustré à la figure 2 le mouvement de flexion est exercé uniquement par le bras du robot. Toutefois il serait également possible d'agencer l'organe de préhension 2 de telle façon à ce qu'il puisse imposer le mouvement de flexion, par exemple en le montant sur un autre bras mobile. Ainsi le mouvement de flexion peut être imposé soit par l'organe de préhension, soit par le bras du robot ou par les deux à la fois. Le choix du bras du robot 13 est toutefois le mieux approprié pour imposer le mouvement de flexion car le robot est de toute façon équipé pour effectuer un mouvement en trois dimensions et il peut être utilisé à la fois pour le transport de feuilles de verre et pour le mouvement de rompage.

Le rompage s'effectue généralement en plusieurs étapes, où à chaque étape on rompt une partie de la feuille de verre. Ainsi il est nécessaire de déplacer entre chaque étape la feuille de verre et l'organe de préhension l'un par rapport à l'autre. Comme décrit auparavant il est préférable de déplacer la feuille de verre 8 montée sur le bras du robot et de laisser l'organe de préhension en position fixe. La feuille de verre sera ainsi soumise à un mouvement de rotation suivant un axe de rotation a (fig. 1) qui s'étend sensiblement perpendiculairement à la surface de celle-ci. Le sens de la rotation est défini par la séquence de rompage.

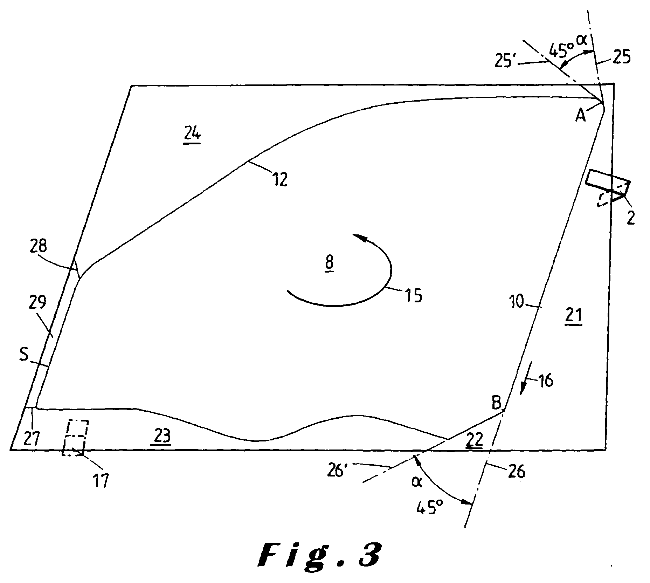

Avant de procéder au rompage d'une feuille de verre en une ou plusieurs parties, on applique sur la surface supérieure de la feuille de verre une ligne de découpe 12 qui délimitera le contour de la vitre à découper. L'application de la ligne de découpe est illustrée à la figure 3.

Mis à part la ligne de découpe 12 qui indique le contour de la vitre, on applique également des lignes de découpe auxiliaires 25, 26, 27 et 28 qui se situent en dehors du contour 12 et facilitent le rompage. Pour appliquer ces lignes de découpe auxiliaires il faut d'abord déterminer le sens de rotation auquel sera soumis la feuille de verre 3 pour parcourir les différentes étapes du procédé de rompage. En effet le sens de rotation va déterminer les endroits successifs auxquels l'organe de préhension 2 va prendre la feuille de verre et donc les endroits où le rompage sera amorcé et la direction suivant laquelle le rompage va évoluer. La ligne de découpe auxiliaire doit se trouver dans le prolongement du parcours que suit le rompage.

Dans l'exemple repris à la figure 3, la flèche 15 indique le sens de rotation auquel la feuille de verre 8 sera soumis. Après avoir appliqué, par exemple à l'aide d'une molette, la ligne de découpe 12 on déterminera par exemple les lignes de découpe auxiliaires 25 et 26. Pour déterminer la ligne de découpe auxiliaire 25 on prend un point A situé sur le contour 12. Le point A est de préférence choisi quelque part sur la courbe que décrit le contour en cet endroit. Toutefois on évitera de choisir le point A tout au début ou tout à la fin de la courbe car ceci empêcherait de profiter de la géométrie de la courbe lors de la propagation du rompage.

En partant du point A on détermine ensuite la tangente 25' en ce point à la courbe 12. La ligne de découpe auxiliaire 25 est alors déterminée en traçant une ligne qui fait un angle a situé entre 20 et 90°, de préférence 45°, avec la tangente dans le contresens de la rotation. La ligne de découpe auxiliaire 26 est déterminée de façon analogue en partant du point B. Toutefois ici l'angle α est déterminé de façon analogue en partant du point B. Toutefois ici l'angle α est déterminé dans le sens de rotation 15 puisque la ligne auxiliaire doit se trouver dans la direction 16 suivant laquelle s'étend la progression de la rupture.

Le choix de l'endroit où on appliquera des lignes de découpe auxiliaires est dicté par le fait qu'une ligne de découpe est appliquée dans chaque angle avec un rayon inférieur à 20 mm ou si l'angle inclus est inférieur à 100° (vu du côté de la pièce utile).

Le rompage proprement dit peut démarrer après que les lignes de découpe et les lignes auxiliaires ont été appliquées sur la feuille de verre. Le bras 13 prend à cette fin la feuille de verre et l'amène vers l'organe de préhension 2. La feuille de verre est présentée de telle façon que l'organe de prise 9 et l'organe de préhension 2 sont toujours situés de part et d'autre de la ligne de découpe. Les mâchoires vont prendre prise sur la feuille de verre qui leur est présentée, en faisant bouger la mâchoire mobile 4 de telle façon que la feuille de verre 3 est serrée entre les mâchoires 3 et 4. A l'aide du robot la feuille de verre est positionnée de telle façon par rapport aux mâchoires que le bord de ces dernières est sensiblement en parallèle à la partie de la ligne de découpe 12 située en face de la mâchoire. Le bord de la mâchoire est situé à une distance qui est adaptée à la marge disponible et au poids de la chute (marge après rompage). Cette distance est située entre 0,5 mm et 10 mm, de préférence entre 1 et 5 mm. Il est préférable que le plan du verre dans la zone devant l'organe de préhension soit coplanaire avec cet organe et ceci dans les limites d'adaptabilité laissées par le préhenseur 9 et la vitre, pour limiter les tensions parasites.

Le choix de la section de la ligne de découpe à présenter en face de la mâchoire doit être judicieux. En effet, il s'agit de faire en sorte que la zone de préhension entre les mâchoires soit bien celle où doivent s'exercer les forces de rompage. Le meilleur choix est une zone plus ou moins rectiligne, si possible en même temps proche d'un bord du verre rejoint par cette ligne, pour limiter l'énergie accumulée avant l'ouverture provoquée dans le verre par le rompage. L'énergie appliquée lors du rompage est en effet concentrée autour des mâchoires. En limitant la distance entre les mâchoires et la ligne de découpe, cette énergie sera également concentrée prés de la ligne de découpe là où elle est nécessaire pour provoquer le rompage. Une position trop éloignée de la ligne de découpe aurait pour conséquence que les ruptures pourraient être initiées en d'autres endroits que la ligne de découpe, notamment près des mâchoires.

La position des mâchoires face à une zone sensiblement rectiligne a pour avantage que la progression du mouvement de rupture sera en ligne droite ce qui est avantageux pour la répartition des forces. On ne positionnera de préférence pas les mâchoires face à une courbe dans la ligne de découpe car ceci mènerait à une répartition difficilement contrôlable des forces exercées et donc à des ruptures incontrôlées du verre.

Dans l'exemple repris à la figure 3, l'organe de préhension 2 est d'abord positionné en l'endroit indiqué par la référence 26, afin de rompre la partie 21 de la feuille de verre 8. L'organe de préhension se trouve là face à une zone rectiligne comme décrit ci-dessus. Dès que la feuille est bien positionnée, les mâchoires reçoivent l'ordre de se renfermer et le mouvement de rompage peut commencer. Après rompage les mâchoires sont réouvertes de façon à libérer la feuille de verre dont la partie 21 a été rompue. La feuille est ensuite entraînée en rotation autour de l'axe a à l'aide du robot, de façon à amener la partie 22, puis la partie 23 face à l'organe de préhension 2. Dans l'exemple repris à la figure 3 on présente l'endroit 17 aux mâchoires car celui se trouve face à une zone rectiligne. Le rompage de la partie 23 peut alors être effectué de façon analogue à celle de la partie 21 et 22. Les mêmes mouvements de rotation et de rompage sont alors effectués pour rompre les parties 29 et 24.

Le rompage même d'une partie de la feuille de verre est effectué par flexion de la feuille de verre 3. A cette fin on impose à une ou à deux parties, une rotation autour d'un axe de rotation 30 qui, suivant l'invention est situé en dessous de la feuille de verre comme illustré aux figures 1, 4 et 5. L'axe de rotation 30 est situé près de la ligne de découpe 12 à une distance d de la surface supérieure de la feuille de verre. L'axe de rotation 30 est de préférence choisi sensiblement parallèle à une ligne 31 tangente à la ligne de découpe 12, dans l'intervalle de la découpe 12 qu'on veut rompre dans cette phase là. Cette dernière option facilite le choix de l'orientation de l'axe de rotation 30. Le fait que l'axe de rotation 30 est situé en dessous de la feuille de verre a pour conséquence que la rupture est initiée en surface de la feuille là où se trouve la ligne de découpe. La rupture progresse alors dans la matière au fur et à mesure que l'angle s'ouvre. Puisque la chute s'écarte ainsi à partir de la surface supérieure de la feuille, les deux parties s'écartent l'une de l'autre sans induire des fortes contraintes de compression dans le verre, provoquant ainsi une rupture correcte et propre du verre.

Plusieurs paramètres déterminent le mouvement de rompage; notamment:
a) la distance d entre l'axe de rotation 30 et le plan de la ligne de découpe 12. Cette distance varie entre 1 mm et l'infini;
b) l'éloignement e du bord de l'organe de préhension 2 de la ligne de découpe 12;
c) la vitesse v de rotation imposée par le mouvement de flexion. Une vitesse faible est préférée pour limiter les forces induites dans le verre mais nuit au temps de cycle;
d) l'angle β de rotation qui peut varier entre 0,1 et 5° et qui permet de contrôler la longueur sur laquelle le trait de découpe s'ouvre.

De préférence ces différents paramètres sont prédéterminés avant de débuter le rompage de la feuille de verre. Au cas où la marge entre le bord de la feuille de verre et la ligne de découpe est réduite, la valeur de l'éloignement e est choisie au minimum possible c'est-à-dire le plus près possible de la ligne de découpe pour les raisons expliquées auparavant.

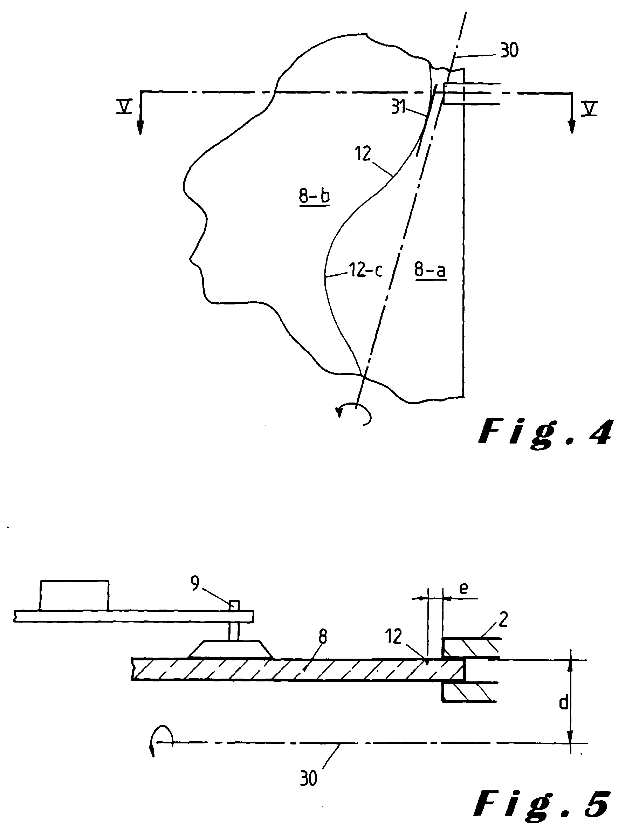

Si l'on constate la formation d'écailles dans le bord le long de la ligne de découpe, la distance d est augmentée, ce qui permet d'augmenter le retrait en fonction de l'angle imposé par la flexion. Si les écailles persistent, souvent dans des formes rentrantes de la ligne de découpe (par exemple la section 12-c figure 4), l'angle β est réduit pour limiter le filage du trait provoqué par le rompage. En effet plus la ligne de découpe sera courbée, plus le trait aura tendance à quitter cette ligne et filer tout droit. Lorsque l'angle β est réduit, la progression est également réduite ce qui permet de maintenir cette progression le long de la ligne de découpe. De cette façon, il est possible de rompre les courbes 12-c dans des phases séquentielles, c'est-à-dire en utilisant deux ou plus de points de prise et de rompage avec une géométrie différente.

Si il y a un problème au passage entre la ligne de découpe et une ligne de découpe auxiliaire, il faut limiter la vitesse v. En effet on laisse généralement une faible distance, par exemple 1 mm entre la ligne de découpe et une ligne de découpe auxiliaire. En limitant la vitesse v la vitesse de progression de la rupture est réduite ce qui donne le temps à l'impulsion de passer cette faible distance et de progresser ensuite suivant la ligne de découpe auxiliaire.

Après avoir terminé le rompage, le robot transporte la vitre vers une machine de meulage et peut recommencer un nouveau cycle. Le procédé de rompage suivant l'invention peut constituer qu'une seule étape dans tout un processus de traitements effectués à la chaîne.

## Revendications

1. Procédé de rompage d'une feuille de verre en au moins deux parties, suivant lequel on applique sur une surface supérieure de la feuille de verre une ligne de découpe pour délimiter la partie à rompre, laquelle feuille est tenue par un organe de support et prise par un organe de préhension, l'organe de support et de préhension étant disposés de part et d'autre de la ligne de découpe, lesquelles parties étant rompues par application d'une flexion sur la feuille de verre, caractérisé en ce que la flexion est appliquée en faisant effectuer à au moins une des parties une rotation par rapport à un axe de rotation situé en dessous de la feuille de verre.

2. Procédé de rompage suivant la revendication 1, caractérisé en ce que le bord de l'organe de préhension est disposé à une distance située entre 0,5 et 10 mm de la ligne de découpe.

3. Procédé de rompage suivant la revendication 1 ou 2, caractérisé en ce que l'organe de préhension est disposé face à une zone rectiligne de la ligne de découpe.

4. Procédé de rompage suivant l'une des revendications 1 à 3 caractérisé en ce que l'angle de ladite rotation, la vitesse du mouvement de rotation et la distance entre la feuille de verre et l'axe de rotation sont prédéterminés.

5. Procédé de rompage suivant la revendication 4, caractérisé en ce que ladite distance est augmentée lorsque des écailles sont observées le long du bord de la ligne de découpe.

6. Procédé de rompage suivant l'une des revendications 1 à 5, caractérisé en ce que l'angle de rotation est situé entre 0,1 et 5°.

7. Procédé de rompage suivant l'une des revendications 1 à 6, caractérisé en ce que l'organe de support est monté sur un bras d'un robot qui fait tourner la partie à rompre par rapport à l'organe de préhension.

8. Procédé de rompage suivant la revendication 7 suivant lequel on applique des lignes de découpe auxiliaires dans la feuille de verre, caractérisé en ce que la séquence des rompages est prédéterminée et en ce que les lignes de découpe auxiliaires sont déterminées en fonction de ladite séquence.

9. Dispositif de rompage agencé à rompre une feuille de verre en au moins deux parties, lequel dispositif comporte un organe de support agencé pour prendre en charge la feuille de verre et un organe de préhension agencé pour prendre prise sur une desdites parties, lequel dispositif comporte également des moyens de flexion agencés pour appliquer une flexion sur la feuille de verre et provoquer ainsi le rompage d'une partie, caractérisé en ce que les moyens de flexion sont agencés pour appliquer une flexion en faisant effectuer à au moins une des parties une rotation par rapport à un axe de rotation situé en dessous de la feuille de verre.
